# EUROPÄISCHE PATENTANMELDUNG

(11) **EP 4 661 243 A1**
(43) Veröffentlichungstag der Anmeldung: **10.12.2025**
(21) Anmeldenummer: 25173514.8
(22) Anmeldetag: 30.04.2025
(51) Int. Cl.: H02J 7/00, B60L 53/122, H02J 50/00, H02J 50/10, H02J 50/12

(54) **VORRICHTUNG ZUM INDUKTIVEN LADEN**

(30) Priorität: 22.05.2024 DE 102024204711
(71) Anmelder: Siemens Aktiengesellschaft, 80333 München (DE)
(72) Erfinder: Pavlovsky, Martin, 81675 München (DE); Kraus, Denis, 80339 München (DE); Lee, Young Hun, 85598 Baldham (DE)
(74) Vertreter: Siemens Patent Attorneys

(57) **Zusammenfassung**

Die Erfindung betrifft eine Vorrichtung zum induktiven Laden eines elektrischen Energiespeichers, insbesondere einer Batterie eines Elektrofahrzeugs, die Vorrichtung aufweisend (a) eine Wallbox-Schaltung (110) mit einem Umrichter (112) und einem Ausgang (114), (b) eine Boden-Schaltung (120) mit einem Eingang (122) und einer Ladespule (124), (c) ein Kabel (130), das eine elektrische Verbindung zwischen dem Ausgang der Wallbox-Schaltung und dem Eingang der Boden-Schaltung bereitstellt, und (d) eine steuerbare Kondensatorschaltung (118, 118'), die zum Einstellen einer Reihenkapazität am Ausgang der Wallbox-Schaltung oder am Eingang der Boden-Schaltung konfiguriert ist, um eine Impedanzanpassung an eine mit dem elektrischen Energiespeicher verbundene Empfängerschaltung zu erzielen. Die Erfindung betrifft auch eine Verwendung der Vorrichtung sowie ein Verfahren.

## Beschreibung

### Technisches Gebiet

Die vorliegende Erfindung betrifft das Gebiet des induktiven Ladens von elektrischen Energiespeichern, insbesondere Vorrichtungen zum induktiven Laden eines elektrischen Energiespeichers, z.B. einer Batterie eines Elektrofahrzeugs, Verwendungen solcher Vorrichtungen sowie ein Verfahren.

### Technischer Hintergrund

Bekannte Vorrichtungen zum induktiven Laden von Batterien, z.B. in Elektrofahrzeugen, bestehen typisch aus zwei Schaltungen, einer Wallbox-Schaltung und einer Boden-Schaltung (Ground Assembly), die mit einem Kabel verbunden sind. Eine effiziente Energieübertragung von der Ladespule in der Boden-Schaltung zu der Empfängerspule in einem über der Boden-Schaltung stehenden Fahrzeug erfordert eine Impedanzanpassung zwischen der Ladevorrichtung und der die Empfängerspule aufweisenden Empfängerschaltung. Insbesondere für interoperable Ladevorrichtungen, die mehrere verschiedene Fahrzeugtypen mit entsprechend verschiedenen Empfängerschaltungen laden können, kann diese Impedanzanpassung durch mehrfache Impedanzänderungen sowohl in der Ladevorrichtung als auch in der Empfängerschaltung erfolgen, was mit großem Aufwand und hohen Kosten verbunden ist.

### Zusammenfassung der Erfindung

Der vorliegenden Erfindung liegt die Aufgabe zugrunde, eine vereinfachte Impedanzanpassung zwischen Ladevorrichtung und Empfängerschaltung zu ermöglichen.

Eine Vorrichtung, deren Verwendung und ein Verfahren werden im Folgenden beschrieben.

Gemäß einem ersten Aspekt der Erfindung wird eine Vorrichtung zum induktiven Laden eines elektrischen Energiespeichers, insbesondere einer Batterie eines Elektrofahrzeugs, beschrieben, die Vorrichtung aufweisend (a) eine Wallbox-Schaltung mit einem Umrichter und einem Ausgang, (b) eine Boden-Schaltung mit einem Eingang und einer Ladespule, (c) ein Kabel, das eine elektrische Verbindung zwischen dem Ausgang der Wallbox-Schaltung und dem Eingang der Boden-Schaltung bereitstellt, und (d) eine steuerbare Kondensatorschaltung, die zum Einstellen einer Reihenkapazität am Ausgang der Wallbox-Schaltung oder am Eingang der Boden-Schaltung konfiguriert ist, um eine Impedanzanpassung an eine mit dem elektrischen Energiespeicher verbundene Empfängerschaltung zu erzielen.

Der beschriebenen Vorrichtung liegt die Erkenntnis zugrunde, dass durch Einstellen einer Reihenkapazität am Ausgang der Wallbox-Schaltung oder am Eingang der Boden-Schaltung eine einfache Möglichkeit für die Impedanzanpassung bereitgestellt werden kann, die insbesondere keine zusätzlichen Impedanzänderungen an anderen Stellen in der Ladevorrichtung und/oder Empfängerschaltung erfordert.

Gemäß einem Ausführungsbeispiel ist die steuerbare Kondensatorschaltung dazu konfiguriert, die Reihenkapazität am Ausgang der Wallbox-Schaltung oder am Eingang der Boden-Schaltung durch Ein- oder Ausschalten von mindestens einem Reihenkondensator einzustellen.

Mit anderen Worten kann die steuerbare Kondensatorschaltung einen Reihenkondensator einschalten bzw. einfügen, um die Reihenkapazität am Ausgang der Wallbox-Schaltung oder am Eingang der Boden-Schaltung zu erhöhen, oder sie kann einen vorhandenen bzw. früher eingeschalteten Reihenkondensator ausschalten bzw. entfernen, um die Reihenkapazität am Ausgang der Wallbox-Schaltung oder am Eingang der Boden-Schaltung zu reduzieren.

Gemäß einem weiteren Ausführungsbeispiel weist der Ausgang und/oder der Eingang zwei Leiter auf, wobei das Ein- oder Ausschalten von mindestens einem Reihenkondensator in einem der zwei Leiter oder in beiden Leitern erfolgt.

Der mit dem Einstellen der Reihenkapazität verbundenen Aufwand ist geringer, wenn der Reihenkondensator nur in einem Leiter ein- oder ausgeschaltet wird. Demgegenüber kann die mit dem Ein- oder Ausschalten von einem Reihenkondensator in beiden Leitern verbundene Symmetrie vorteilhaft sein.

Gemäß einem weiteren Ausführungsbeispiel ist die steuerbare Kondensatorschaltung zum Schalten zwischen einer Mehrzahl von Zuständen konfiguriert, wobei in jedem Zustand eine jeweilige Reihenkapazität am Ausgang der Wallbox-Schaltung oder am Eingang der Boden-Schaltung eingestellt ist.

Mit anderen Worten kann zwischen verschiedenen Zuständen geschaltet werden, so dass entsprechend verschiedenen Reihenkapazitäten eingestellt werden. Durch eine passende Auswahl der verschiedenen Reihenkapazitäten kann somit in einfacher Weise eine Impedanzanpassung erreicht werden.

Gemäß einem weiteren Ausführungsbeispiel weist die Mehrzahl von Zuständen einen Zustand auf, in welchem kein Reihenkondensator am Ausgang der Wallbox-Schaltung oder am Eingang der Boden-Schaltung eingeschaltet ist.

Mit anderen Worten ist in diesem Zustand kein zusätzlicher Reihenkondensator vorhanden. Dieser Zustand kann vorteilhafterweise als Grundzustand verwendet werden, in welchem eine Impedanzanpassung mit einer bekannten Empfängerschaltung unter typischen Bedingungen, insbesondere was die Positionierung des Fahrzeugs angeht, ohne Nachjustierung zu erwarten ist. Sollte dann trotzdem keine gute Kopplung zwischen Ladevorrichtung und Empfängerschaltung gegeben sein, kann zu einem anderen Zustand gewechselt werden.

Gemäß einem weiteren Ausführungsbeispiel weist die Mehrzahl von Zuständen einen ersten Zustand auf, in welchem mindestens ein erster Reihenkondensator am Ausgang der Wallbox-Schaltung oder am Eingang der Boden-Schaltung eingeschaltet ist.

In dem ersten Zustand wird die eingestellte Reihenkapazität somit ganz oder teilweise von der Kapazität des ersten Reihenkondensators bestimmt.

Gemäß einem weiteren Ausführungsbeispiel weist die Mehrzahl von Zuständen einen zweiten Zustand auf, in welchem mindestens ein zweiter Reihenkondensator am Ausgang der Wallbox-Schaltung oder am Eingang der Boden-Schaltung eingeschaltet ist.

In dem zweiten Zustand wird die eingestellte Reihenkapazität somit ganz oder teilweise von der Kapazität des zweiten Reihenkondensators bestimmt.

Gemäß einem weiteren Ausführungsbeispiel weisen der erste Reihenkondensator und der zweite Reihenkondensator unterschiedliche Kapazitäten auf.

Mit anderen Worten können durch Wechseln zwischen dem ersten und zweiten Zustand entsprechend unterschiedliche Reihenkapazitäten eingestellt werden.

Gemäß einem zweiten Aspekt der Erfindung wird die Verwendung einer Vorrichtung gemäß dem ersten Aspekt zum Laden eines elektrischen Energiespeichers, insbesondere zum Laden einer Batterie eines Elektrofahrzeugs, beschrieben.

Der beschriebenen Verwendung liegt im Wesentlichen die gleiche Erkenntnis zugrunde wie der oben beschriebene Vorrichtung gemäß dem ersten Aspekt, nämlich dass durch Einstellen einer Reihenkapazität am Ausgang der Wallbox-Schaltung oder am Eingang der Boden-Schaltung eine besonders einfache Impedanzanpassung ermöglicht wird.

Gemäß einem dritten Aspekt der Erfindung wird ein Verfahren beschrieben, das Folgendes aufweist: (a) Bereitstellen einer Wallbox-Schaltung mit einem Umrichter und einem Ausgang, (b) Bereitstellen einer Boden-Schaltung mit einem Eingang und einer Ladespule, (c) Bereitstellen eines Kabels, das eine elektrische Verbindung zwischen dem Ausgang der Wallbox-Schaltung und dem Eingang der Boden-Schaltung bereitstellt, und (d) Bereitstellen einer steuerbaren Kondensatorschaltung, die zum Einstellen einer Reihenkapazität am Ausgang der Wallbox-Schaltung oder am Eingang der Boden-Schaltung konfiguriert ist, um eine Impedanzanpassung an eine mit dem elektrischen Energiespeicher verbundene Empfängerschaltung zu erzielen.

Auch das Verfahren gemäß diesem dritten Aspekt basiert im Wesentlichen auf der gleichen Idee wie die oben beschriebene Vorrichtung gemäß dem ersten Aspekt und besteht insbesondere in der Bereitstellung einer solchen Vorrichtung.

Es sei darauf hingewiesen, dass mit der vorliegenden Erfindung die Reihenkapazität entweder am Ausgang der Wallbox-Schaltung oder am Eingang der Boden-Schaltung eingestellt werden kann. Die erfindungsgemäße Vereinfachung der Impedanzanpassung kann mit beiden Varianten (d.h. sowohl mit Einstellung der Reihenkapazität am Ausgang der Wallbox-Schaltung als auch mit Einstellung der Reihenkapazität am Eingang der Boden-Schaltung) gleichermaßen erreicht werden, da die beiden Varianten elektrisch äquivalent sind. Die genaue Positionierung der Reihenkondensatoren kann somit Anhand der Gesamtumstände bei der Implementation frei gewählt werden.

### Kurze Beschreibung der Zeichnungen

Figur 1 zeigt eine beispielhafte induktive Ladevorrichtung.
Figur 2 bis Figur 4 zeigen den Einfluss von verschiedenen Impedanzänderungen in der in Figur 1 dargestellten Ladevorrichtung auf die Impedanzebene der Boden-Schaltung.
Figur 5 zeigt eine Reihe von Arbeitspunkten in der Impedanzebene der Boden-Schaltung.
Figur 6 zeigt eine induktive Ladevorrichtung gemäß einem Ausführungsbeispiel der vorliegenden Erfindung.
Figur 7 zeigt eine Impedanzebene der Boden-Schaltung der in der Figur 6 dargestellten Ladevorrichtung.
Figur 8 zeigte eine steuerbare Kondensatorschaltung gemäß dem in der Figur 6 gezeigten Ausführungsbeispiel.

### Detaillierte Beschreibung der Zeichnungen

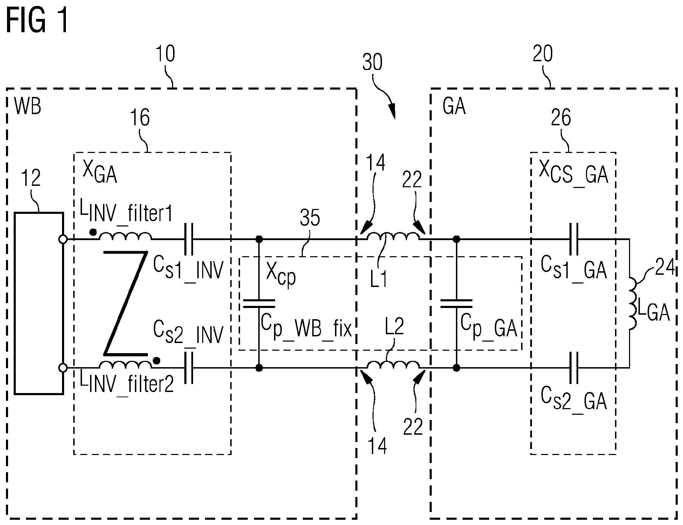

Figur 1 zeigt eine beispielhafte induktive Ladevorrichtung, die zum induktiven Laden eines Elektrofahrzeugs über eine im Boden, z.B. unterhalb eines Parkplatzes angebrachte Ladespule eingerichtet ist. Die Ladevorrichtung weist eine Wallbox-Schaltung 10, eine Boden-Schaltung 20 und ein Kabel 30 auf. Die Wallbox-Schaltung weist einen Umrichter 12, einen Ausgang 14 und eine Filterschaltung 16 (Induktivitäten L_{INV_filter1} und L_{INV_filter2} sowie Kondensatoren C_{s1_INV} und C_{s2_INV}) auf. Die Bodenschaltung 20 weist einen Eingang 22, eine Ladespule 24 mit Induktivität L_{GA} und eine Reihen-Kondensator-Schaltung 26 (Kondensatoren C_{s1_GA} und C_{s2_GA}) auf. Das Kabel 30 weist Induktivitäten L₁ und L₂ auf und stellt eine elektrische Verbindung zwischen dem Ausgang 14 der Wallbox-Schaltung 10 und dem Eingang 22 der Boden-Schaltung 20 bereit. Ferner zeigt die Figur 1 zum Zwecke der nachfolgenden Diskussion eine Parallel-Kondensator-Schaltung 35 mit einem ersten Parallelkondensator C_{p_WB_fix} am Ausgang 14 der Wallbox-Schaltung 10 und einem zweiten Parallel-Kondensator C_{p_GA} am Eingang 22 der Boden-Schaltung 20. Es sei darauf hingewiesen, dass die in der Figur 1 gezeigte Parallel-Kondensator-Schaltung 35 nicht im Stand der Technik bekannt ist und hier als eine von mehreren Möglichkeiten zur Impedanzanpassung gezeigt und diskutiert wird. Es sei ferner darauf hingewiesen, dass die Vorrichtung noch weitere, im vorliegenden Zusammenhang aber nicht relevante Bauelemente und Merkmale aufweist, die zwecks Vereinfachung nicht dargestellt sind.

Wenn ein entsprechend ausgestattetes Fahrzeug, insbesondere ein Elektrofahrzeug oder ein Bus, Lastwagen oder ähnliches mit einer Empfängerspule über der Bodenspule 24 positioniert ist, kann die Batterie des Fahrzeugs durch induktive Kopplung zwischen der Bodenspule 24 und der Empfängerspule geladen werden. Für eine gute induktive Kopplung muss eine Impedanzanpassung der Ladevorrichtung an die die Empfängerspule aufweisende Empfängerschaltung des Fahrzeugs gegeben sein.

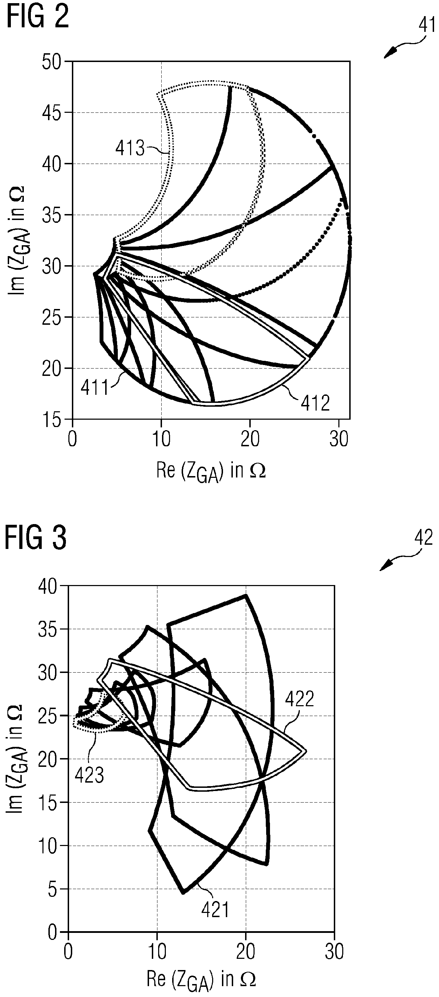

Wie nachfolgend mit Bezug auf die Figur 2 bis Figur 5 erläutert, kann die erforderliche Impedanzanpassung aber nicht in einfacher Weise durch Änderung der verschiedenen, in der Figur 1 gezeigten Impedanzen erreicht werden.

Die Figur 2 zeigt den Einfluss von Änderungen in der Reaktanz X_{GA} der Filterschaltung 16. Dabei zeigt jede Kurve im Diagramm 41 für verschiedene Werte der Reaktanz X_{GA} eine entsprechende Impedanzebene in Bezug auf der Boden-Schaltung 20. Die Kurve 411 entspricht einem niedrigsten Wert, z.B. X_{GA_min} = 1 Ω, die Kurve 412 entspricht einem nominellen Wert, z.B. X_{GA_nom} = 12,616 Ω und die Kurve 413 entspricht einem höchsten Wert, z.B. X_{GA_max} = 25 Ω. Aus der Figur 2 geht somit hervor, dass mit zunehmender Reaktanz X_{GA} die Impedanzebene größer und nach oben verdreht wird.

Die Figur 3 zeigt den Einfluss von Änderungen in der Reaktanz X_{CP} der in der Figur 1 gezeigten Parallel-Kondensator-Schaltung 35. Dabei zeigt jede Kurve im Diagramm 42 für verschiedene Werte der Reaktanz X_{CP} eine entsprechende Impedanzebene in Bezug auf der Boden-Schaltung 20. Die Kurve 423 entspricht einem niedrigsten Wert X_{CP_min} (entsprechend z.B. einer maximalen Parallelkapazität C_{p_max} = 289,74 nF), die Kurve 422 entspricht einem nominellen Wert X_{CP_nom} (entsprechend z.B. einer nominellen Parallelkapazität C_{p_nom} = 131,7 nF) und die Kurve 421 entspricht einem höchsten Wert X_{CP_max} (entsprechend z.B. einer minimalen Parallelkapazität C_{p_min} = 52,86 nF). Aus der Figur 3 geht somit hervor, dass mit zunehmender Reaktanz X_{CP} (d.h. mit abnehmender Parallelkapazität Cₚ) die Impedanzebene größer, gedreht und nach rechts verschoben wird.

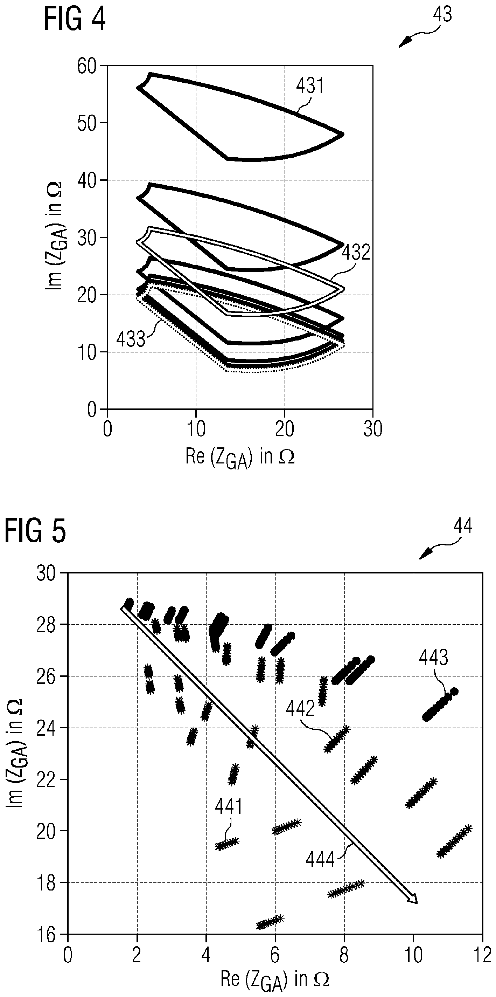

Die Figur 4 zeigt den Einfluss von Änderungen in der Reaktanz X_{Cs_GA} der in der Figur 1 gezeigten Reihen-Kondensator-Schaltung 26. Dabei zeigt jede Kurve im Diagramm 43 für verschiedene Werte der Reaktanz X_{Cs_Ga}, eine entsprechende Impedanzebene in Bezug auf der Boden-Schaltung 20. Die Kurve 433 entspricht einem niedrigsten Wert X_{Cs_GA_min} (entsprechend z.B. einer maximalen Reihenkapazität C_{s_max} = 228,8 nF), die Kurve 432 entspricht einem nominellen Wert X_{Cs_GA_nom} (entsprechend z.B. einer nominellen Reihenkapazität C_{s_nom} = 104 nF) und die Kurve 431 entspricht einem höchsten Wert X_{Cs_GA_max} (entsprechend z.B. einer minimalen Reihenkapazität C_{s_min} = 41,6 nF). Aus der Figur 4 geht somit hervor, dass mit zunehmender Reaktanz X_{Cs_GA} (d.h. mit abnehmender Reihenkapazität Cₛ) die Impedanzebene ihre Größe und Form beibehält, aber nach oben verschoben wird.

Die Figur 5 zeigt ein Diagramm 44 mit einer Reihe von Arbeitspunkten in der Impedanzebene der Boden-Schaltung für drei verschiedene Empfängerschaltungen. Dabei beziehen sich die Punkte 441 auf eine Referenz-Empfängerschaltung mit einer ersten Impedanz Z1, die Punkte 442 beziehen sich auf eine Referenz-Empfängerschaltung mit einer zweiten Impedanz Z2 und die Punkte 443 beziehen sich auf eine Referenz-Empfängerschaltung mit einer dritten Impedanz Z3. Allgemein entsprechen die im Diagramm 44 oben links angeordneten Arbeitspunkte eine schwächere Kopplung zwischen Boden-Schaltung und Empfängerschaltung, während die im Diagramm 44 unten rechts angeordneten Arbeitspunkte eine stärkere Kopplung entsprechen. Dieser Zusammenhang ist mit dem Pfeil 444 verdeutlicht.

Mit Rückblick auf die Diagramme 41, 42 und 43 in den Figuren 2 bis 4 ist somit erkennbar, dass eine Verschiebung der Impedanzebene entlang des Pfeils 444 nur durch komplizierte Anpassungen von mehreren Impedanzen in der in Figur 1 gezeigten Vorrichtung möglich ist, damit die in den Figuren 2 bis 4 gezeigten verschiedenen Verschiebungen, Drehungen und Größenänderungen in Kombination zu der gewünschten Verschiebung führen können.

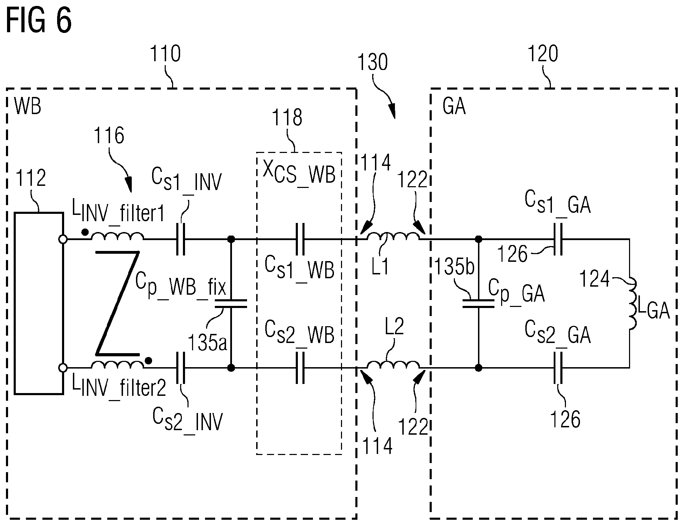

Diese Komplexität wird mit der in der Figur 6 gezeigte erfindungsgemäße induktive Ladevorrichtung vermieden. Spezifischer zeigt die Figur 6 eine erfindungsgemäße induktive Ladevorrichtung, die bis auf einen entscheidenden Unterscheid identisch mit der in der Figur 1 gezeigten Vorrichtung ist.

Die Figur 6 zeigt eine erfindungsgemäß induktive Ladevorrichtung, die zum induktiven Laden eines Elektrofahrzeugs über eine im Boden, z.B. unterhalb eines Parkplatzes angebrachte Ladespule eingerichtet ist. Die erfindungsgemäße Ladevorrichtung weist eine Wallbox-Schaltung 110, eine Boden-Schaltung 120 und ein Kabel 130 auf. Die Wallbox-Schaltung weist einen Umrichter 112, einen Ausgang 114 und eine Filterschaltung 116 (Induktivitäten L_{INV_filter1} und L_{INV_filter2} sowie Kondensatoren C_{s1_INV} und C_{s2_INV}) auf. Die Bodenschaltung 120 weist einen Eingang 122, eine Ladespule 124 mit Induktivität L_{GA} und eine Reihen-Kondensator-Schaltung 126 (Kondensatoren C_{s1_GA} und C_{s2_GA}) auf. Das Kabel 130 weist Induktivitäten L₁ und L₂ auf und stellt eine elektrische Verbindung zwischen dem Ausgang 114 der Wallbox-Schaltung 110 und dem Eingang 122 der Boden-Schaltung 120 bereit. Ferner zeigt auch die Figur 6 eine Parallel-Kondensator-Schaltung mit einem ersten Parallelkondensator 135a bzw. C_{p_WB_fix} am Ausgang 114 der Wallbox-Schaltung 110 und einem zweiten Parallel-Kondensator 135b bzw. C_{p_GA} am Eingang 122 der Boden-Schaltung 120. Es sei darauf hingewiesen, dass die in der Figur 6 gezeigte Parallel-Kondensator-Schaltung nicht wesentlich für die vorliegende Erfindung ist und hier lediglich als eine von mehreren Möglichkeiten zur Impedanzanpassung gezeigt und diskutiert wurde. Es sei ferner darauf hingewiesen, dass die Vorrichtung noch weitere, im vorliegenden Zusammenhang aber nicht relevante Bauelemente und Merkmale aufweisen mag, die zwecks Vereinfachung nicht dargestellt sind.

Anders als die Vorrichtung der Figur 1 weist die erfindungsgemäße Vorrichtung eine steuerbare Kondensatorschaltung 118 auf. In dem gezeigten Beispiel weist die steuerbare Kondensatorschaltung 118 zwei Reihenkondensatoren C_{s1_WB} und C_{s2_WB} auf. Wie nachfolgend beschrieben können die Kapazitäten dieser Reihenkondensatoren geändert werden, um die erforderliche Impedanzanpassung durch Einstellen der Reihenkapazität am Ausgang 114 der Wallbox-Schaltung 110 in einfacher Weise zu erzielen. Es sei darauf hingewiesen, dass die gleiche vorteilhafte Wirkung erzielt werden kann, wenn die steuerbare Kondensatorschaltung 118 statt am Ausgang 114 der Wallbox-Schaltung 110 am Eingang 122 der Boden-Schaltung 122 angebracht ist. Nachfolgend wird zwecks Vereinfachung aber nur die in der Figur 6 gezeigte Variante detailliert erläutert. Erfindungsgemäße Ausführungsbeispiele, in denen die steuerbare Kondensatorschaltung am Eingang 122 der Boden-Schaltung 120 angebracht ist, d.h. am anderen Ende des Kabels 130, sind somit nicht gezeigt aber von den beigefügten Patentansprüchen gleichermaßen erfasst.

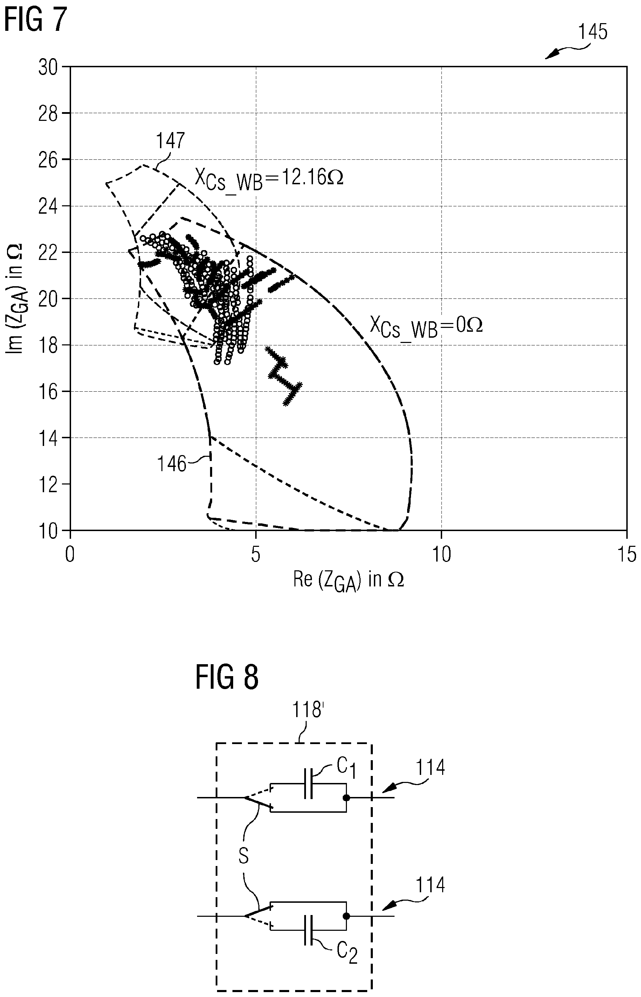

Wenn ein entsprechend ausgestattetes Fahrzeug, insbesondere ein Elektrofahrzeug oder ein Bus, Lastwagen oder ähnliches, mit einer Empfängerspule über der Bodenspule 124 positioniert ist, kann die Batterie des Fahrzeugs durch induktive Kopplung zwischen der Bodenspule 124 und der Empfängerspule geladen werden. Mit der vorliegenden Erfindung kann die für eine gute induktive Kopplung erforderliche Impedanzanpassung der Ladevorrichtung an die die Empfängerspule aufweisende Empfängerschaltung in einfacher Weise erreicht werden. Dies geht insbesondere aus der Darstellung in der Figur 7 hervor.

Die Figur 7 zeigt mit Diagramm 145 den Einfluss von Änderungen in der am Ausgang 114 der Wallbox-Schaltung 110 eingestellte Reihenkapazität Cs auf die Impedanzebene der Boden-Schaltung der in der Figur 6 dargestellten Ladevorrichtung gemäß der vorliegenden Erfindung. Jede Kurve im Diagramm 145 zeigt für verschiedene Werte der Reihenkapazität Cs bzw. der entsprechende Reaktanz X_{Cs_WB} eine entsprechende Impedanzebene in Bezug auf die Boden-Schaltung 120. Die Kurve 145 entspricht dabei einer minimalen Reaktanz X_{Cs_WB} = 0 Ω und die Kurve 147 entspricht einer maximalen Reaktanz X_{Cs_WB} = 12,16 Ω. Mit zunehmender Reaktanz X_{Cs_WB} (d.h. mit abnehmender Reihenkapazität Cₛ) dreht sich die Impedanzebene nur wenig, wird etwas kleiner und bewegt sich in diagonaler Richtung nach links und oben. Es ist deutlich erkennbar, dass diese Veränderung genau dem Verhalten der Arbeitspunkte mit abnehmender Kopplung (vgl. Figur 5) entspricht. Mit den zwei Einstellungen X_{Cs_WB} = 0 Ω und X_{Cs_WB} = 12,16 Ω lässt sich somit eine Vielzahl von Arbeitspunkten abdecken.

Figur 8 zeigt eine steuerbare Kondensatorschaltung 118' gemäß dem in der Figur 6 gezeigten Ausführungsbeispiel. Mit der dargestellten steuerbaren Kondensatorschaltung 118' lässt sich in einfacher Weise die in der Figur 7 gezeigte Änderung der Impedanzebene erreichen. Die steuerbare Kondensatorschaltung 118' weist Schalter S auf, die im gezeigten Grundzustand eine direkte Verbindung in jeder Leitung am Ausgang 114 der Wallbox-Schaltung 110 bewirkt. Dieser Grundzustand entspricht der mit der Kurve 146 in Figur 7 dargestellten Impedanzebene. Falls erforderlich, d.h. wenn die Kopplung nicht ausreichend ist, dann werden die Schalter in die gestrichelt dargestellt Position geschaltet, so dass die Reihenkondensatoren C₁ und C₂ eingeschaltet werden. Dieser Zustand entspricht dann der mit der Kurve 147 in Figur 7 dargestellten Impedanzebene. Falls erforderlich kann die steuerbare Kondensatorschaltung mit mehreren Kondensatoren und entsprechenden Zuständen erweitert werden. Wie oben erwähnt kann die steuerbare Kondensatorschaltung 118' erfindungsgemäß alternativ auch am Eingang 122 der Boden-Schaltung 120 angebracht sein.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

### Bezugszeichenliste

- 10, 110: Wallbox-Schaltung
- 12, 112: Umrichter
- 14, 114: Ausgang
- 16, 116: Filterschaltung
- 118, 118': Steuerbare Kondensatorschaltung
- 20, 120: Boden-Schaltung
- 22, 122: Eingang
- 24, 124: Ladespule
- 26, 126: Reihen-Kondensator-Schaltung
- 30, 130: Kabel
- L₁: Induktivität
- L₂: Induktivität
- 41-44: Diagramm
- 411-413: Kurve
- 421-423: Kurve
- 431-433: Kurve
- 441-443: Arbeitspunkte
- 444: Pfeil
- 145: Diagramm
- 146, 147: Kurve
- S: Schalter
- C₁, C₂: Reihenkondensator

## Patentansprüche

1. Vorrichtung zum induktiven Laden eines elektrischen Energiespeichers, insbesondere einer Batterie eines Elektrofahrzeugs, die Vorrichtung aufweisend
eine Wallbox-Schaltung (110) mit einem Umrichter (112) und einem Ausgang (114),
eine Boden-Schaltung (120) mit einem Eingang (122) und einer Ladespule (124),
ein Kabel (130), das eine elektrische Verbindung zwischen dem Ausgang der Wallbox-Schaltung und dem Eingang der Boden-Schaltung bereitstellt, und
eine steuerbare Kondensatorschaltung (118, 118'), die zum Einstellen einer Reihenkapazität am Ausgang der Wallbox-Schaltung oder am Eingang der Boden-Schaltung konfiguriert ist, um eine Impedanzanpassung an eine mit dem elektrischen Energiespeicher verbundene Empfängerschaltung zu erzielen.

2. Die Vorrichtung gemäß Anspruch 1, wobei die steuerbare Kondensatorschaltung dazu konfiguriert ist, die Reihenkapazität am Ausgang der Wallbox-Schaltung oder am Eingang der Boden-Schaltung durch Ein- oder Ausschalten von mindestens einem Reihenkondensator (C₁, C₂) einzustellen.

3. Die Vorrichtung gemäß Anspruch 2, wobei der Ausgang und/oder der Eingang zwei Leiter aufweist, wobei das Ein- oder Ausschalten von mindestens einem Reihenkondensator in einem der zwei Leiter oder in beiden Leitern erfolgt.

4. Die Vorrichtung gemäß einem der Ansprüche 1 bis 3, wobei die steuerbare Kondensatorschaltung zum Schalten zwischen einer Mehrzahl von Zuständen konfiguriert ist, wobei in jedem Zustand eine jeweilige Reihenkapazität am Ausgang der Wallbox-Schaltung oder am Eingang der Boden-Schaltung eingestellt ist.

5. Die Vorrichtung gemäß Anspruch 3, wobei die Mehrzahl von Zuständen einen Zustand aufweist, in welchem kein Reihenkondensator am Ausgang der Wallbox-Schaltung oder am Eingang der Boden-Schaltung eingeschaltet ist.

6. Die Vorrichtung gemäß Anspruch 4 oder 5, wobei die Mehrzahl von Zuständen einen ersten Zustand aufweist, in welchem mindestens ein erster Reihenkondensator am Ausgang der Wallbox-Schaltung oder am Eingang der Boden-Schaltung eingeschaltet ist.

7. Die Vorrichtung gemäß einem der Ansprüche 4 bis 6, wobei die Mehrzahl von Zuständen einen zweiten Zustand aufweist, in welchem mindestens ein zweiter Reihenkondensator am Ausgang der Wallbox-Schaltung oder am Eingang der Boden-Schaltung eingeschaltet ist.

8. Die Vorrichtung gemäß Anspruch 6 und 7, wobei der erste Reihenkondensator und der zweite Reihenkondensator unterschiedliche Kapazitäten aufweisen.

9. Verwendung der Vorrichtung gemäß einem der vorhergehenden Ansprüche zum Laden eines elektrischen Energiespeichers, insbesondere zum Laden einer Batterie eines Elektrofahrzeugs.

10. Verfahren aufweisend
Bereitstellen einer Wallbox-Schaltung (10) mit einem Umrichter (12) und einem Ausgang (14),
Bereitstellen einer Boden-Schaltung (20) mit einem Eingang (22) und einer Ladespule (24),
Bereitstellen eines Kabels (30), das eine elektrische Verbindung zwischen dem Ausgang der Wallbox-Schaltung und dem Eingang der Boden-Schaltung bereitstellt, und
Bereitstellen einer steuerbaren Kondensatorschaltung (118, 118'), die zum Einstellen einer Reihenkapazität am Ausgang der Wallbox-Schaltung oder am Eingang der Boden-Schaltung konfiguriert ist, um eine Impedanzanpassung an eine mit dem elektrischen Energiespeicher verbundene Empfängerschaltung zu erzielen.
